# EUROPEAN PATENT APPLICATION

(11) **EP 1 331 255 A1**
(43) Date of publication of application: **30.07.2003**
(21) Application number: 01972660.3
(22) Date of filing: 02.10.2001
(51) Int. Cl.: C09D 153/02

(54) **WATER-BASED COATING COMPOSITION**

(30) Priority: 04.10.2000 JP 2000304766; 01.11.2000 JP 2000334311
(71) Applicant: KANSAI PAINT CO., LIMITED, Amagasaki-shi Hyogo 661-0964 (JP)
(72) Inventor: FUJII, Takeshi, Kansai Paint Co, . Ltd., Kanagawa 254-0016 (JP); OOKUBO, Takashi, Kansai Paint Co., Ltd., Kanagawa 254-0016 (JP); IGARASHI, Hiroshi, Kansai Paint Co., Ltd., Hiratsuka-shi, Kanagawa 254-0016 (JP); ADACHI, Takato, Kansai Paint Co., Ltd., Hiratsuka-shi, Kanagawa 254-0016 (JP); OGAWA, Tetuo, Kansai Paint Co., Ltd., Hiratsuka-shi, Kanagawa 254-0016 (JP)
(74) Representative: Stuart, Ian Alexander
(86) International application number: JP0108686
(87) International publication number: WO02028976

(57) **Abstract**

A water based coating composition prepared by dispersing a heat-curable coating composition into water in the presence of a suspension stabilizer comprising a block copolymer to obtain a water dispersion, followed by optionally removing an organic solvent from the water dispersion to obtain a water based coating composition having a mean particle size of 0.1 to 10 µm, said block copolymer being a compound (c) prepared by subjecting a compound (a) represented by the following general formula (1): 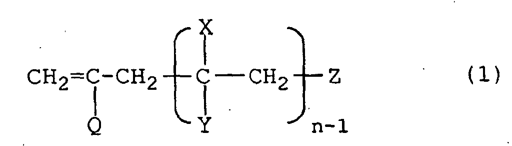 and a polymerizable unsaturated monomer (b) to radical polymerization in the presence of a radical polymerization initiator to obtain a compound (c), and being neutralized with a basic substance.

## Description

### Field of the Invention:

The present invention relates to a water based coating composition which is capable of having a low VOC (Volatile Organic Compounds) content and is capable of forming a coating film showing good properties in appearance, weather resistance, and which is useful, for example, in coating of an automobile body.

### Background Art:

In the field of the coating industry, particularly coating of the automobile body, a coating composition having a low VOC (Volatile Organic Compounds) content is highly demanded from the standpoint of protection of global environment. In addition, a coating film formed therefrom showing high finish, high performances in weather resistance, acid resistance, water resistance and the like is also demanded. A low VOC coating composition proposed in the art may include a powder coating composition, a powder slurry coating composition prepared by dispersing powder coating composition particles having a particle size of 1 to 10 µm into water, and a water based coating composition such as a water based emulsion coating composition, and the like.

However, the powder coating composition is such that use of fine particles is effective on improvements in finishing, but may remarkably reduce a coating efficiency, resulting in making it difficult to use particles having a particle size of 5 µm or less, and that the use of the sole powder coating apparatus as the coating apparatus needs a huge plant investment. A water based coating composition having a particle size of 1 µm or less, for example, a water based emulsion coating composition, is such that finish may be unsatisfactory, and that a water based coating apparatus in the art may be applicable, but bubbling in the coating. film may develop.

On the other hand, the powder slurry coating composition has such advantages that fine particles can be used differently from the above powder coating composition, that a dense packing of particles on coating makes it possible to provide a good surface smoothness of the coating film, that the water based coating apparatus in the art can be used, and that a larger particle size compared with that in the water based coating composition makes it difficult to develop bubblings in the coating film, resulting in providing good finish.

However, the powder slurry coating composition prepared by dispersing powder coating composition particles into water has such disadvantages that many preparation steps results disadvantages in economy and energy, that many disadvantages may result in safety and health, and that a method of simply obtaining a slurry type coating composition is demanded.

The water dispersion type coating composition such as the powder slurry coating composition is such that coating is carried out by dispersing particles into water by use of a suspension stabilizer, followed by adding a thickening agent, and directly coating, resulting in that the suspension stabilizer remains in the coating film. Polyvinyl alcohol and polyethylene oxide as the suspension stabilizer show good properties in water dispersibility and storage stability, but show poor compatibility with the coating film component and do not included into the coating film component, resulting in producing such problems that the coating film becomes cloudy, and that coating film properties such as water resistance, acid resistance and the like are reduced.

Recently, studies on a water-soluble resin prepared by neutralizing polyester resin and acrylic resin respectively having a high acid value and a high hydroxy value have been made. However, no water-dispersible coating composition capable of satisfying all of the low VOC content, water dispersibility and storage stability of the coating composition, and the fine finish, water resistance and acid resistance of the coating film is known in the art.

### Disclosure of the Invention:

The present inventors made intensive studies for the purpose of solving the above problems to find out that the use of a water based coating composition prepared by a method which comprises dispersing a heat-curable coating composition into water by use of a block copolymer as a suspension stabilizer to obtain a water dispersion, followed by optionally removing an organic solvent to obtain a water dispersion having a mean particle size of 0.1 to 10 µm, wherein the block copolymer is prepared by subjecting a compound (a) represented by the following general formula (1) and a polymerizable unsaturated monomer (b) to a radical polymerization in the presence of a radical polymerization initiator to obtain a block copolymer compound (c), followed by neutralizing the compound (c), makes it possible to satisfy all of the low VOC content of the coating composition, and excellent coating film performances in acid resistance and water resistance, resulting in completing the present invention.

That is, the present invention provides a water based coating composition prepared by dispersing a heat-curable coating composition into water in the presence of a suspension stabilizer comprising a block copolymer to obtain a water dispersion, followed by optionally removing an organic solvent from the water dispersion to obtain a water based coating composition having a mean particle size of 0.1 to 10 µm, said block copolymer being a compound (c) prepared by subjecting a compound (a) represented by the following general formula (1): 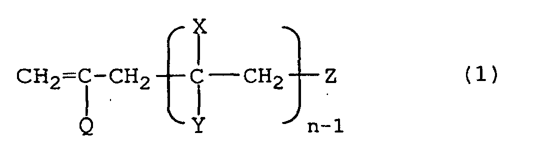 where Q and Y respectively represent H, R, O₂CR, COOH, COOR, CONHR, CONR₂, CN, CONH₂, CONR, phenyl group or halogen, X represents H or R, Z represents H, SR, SOR, SOOR or R, R represents alkyl group, aryl group, aralkyl group, alkalyl group, organosilyl group or alkoxysilyl group, and can contain at least one group or atom selected from epoxy group, oxetane, oxirane ring, hydroxyl group, alkoxy group, amino group, oxazoline, halogen and halogenated alkyl group, being same or different, n is an integer of 6 to 100; preferably 9 to 20; and a polymerizable unsaturated monomer (b) to radical polymerization in the presence of a radical polymerization initiator, and being neutralized with a basic substance.

### Most Preferable Embodiment of the Invention:

The compound (a) used in the present invention is a known compound per se, may preferably be prepared, for example, by a catalytic chain transfer polymerization method (CCTP method) and may include a compound obtained by subjecting a polymerizable unsaturated monomer to radical polymerization in the presence of an unsaturated compound disclosed in Japanese Patent Application Laid-Open Nos. 506392/95, 506393/7, 2954/95, etc.

The CCTP method is disclosed, for example, in Japanese Patent Publication Nos. 23209/94 and 35411/95, Japanese Patent Application Laid-Open Nos. 501457/97 and 176256/97, Macromolecules 1996, 29, 8083-8089, etc., and the compound (a) may be prepared, for example, by polymerizing a polymerizable unsaturated monomer in the presence of a metal complex as a catalytic chain transfer agent and a radical polymerization initiator by a solution polymerization in an organic solvent or by an emulsion polymerization in water according to the above descriptions.

A monomer used in the preparation of the compound (a) or the compound (c) obtained by subjecting the compound (a) and the polymerizable unsaturated monomer (b) to a radical reaction is required to have a radically polymerizable unsaturated group. These monomers may be used alone or in combination.

The metal complex may include, for example, cobalt complex, iron complex, nickel complex, ruthenium complex, rhodium complex, palladium complex, rhenium complex, iridium complex and the like. Of these, the cobalt complex is preferable as the chain transfer agent.

The cobalt complex may include ones disclosed, for example, in Japanese Patent Publication Nos. 23209/94 and 35411/95, USP 4526945, USP 4694054, USP 4837326, USP 4886861, USP 5324879, WO95/17435 and the like, and may specifically include, for example,
bis(borondifluorodimethyldioxyiminocyclohexane) Co (II), bis(1,2-dioxyiminoethane) Co (II),
bis(borondifluorodimethylglyoximate) Co (II), bis(borondifluorodiphenyloximate) Co(II), cobalt (II) chelate of vicinaliminohydroxyimino compound, cobalt (II) chelate of tetraazatetraalkylcyclotetradodecatetraene, cobalt (II) chelate of N,N'-bis(salicylidene) ethylenediamine, cobalt (II) chelate of dialkyldiazadioxodialkyldodecadiene, cobalt (II) chelate of dialkyldiazadioxodialkyltridecadiene, cobalt. (II) porphyrin complex and the like. Of these, bis(borondifluorodimethylglyoximate) Co (II), and bis(borondifluorodiphenylglyoximate) Co (II) are easily available and preferable.

Such a complex that a radical cleavage-capable group is bonded directly to a metal may also be used in place of the above metal complex. The radical cleavage-capable group may include, for example, alkyl group, aryl group, heterocyclic group and the like, and further may include substituted derivatives, which are homolytic fission-capable from a metal ion on irradiation of visible light or ultraviolet light, or on heating, halides, other ions, nitrile or ester bonded to the chelate metal ion respectively, aromatic group and substituted aromatic group substituted with carbon atom bonded to metal ion respectively, and the like.

A mixing amount of the metal complex may not particularly be limited, but usually is in the range of 1 × 10⁻⁶ to 1 (one) part by weight, preferably 1 × 10⁻⁴ to 0.5 part by weight per 100 parts by weight of the monomer.

For the purpose of controlling a reactivity of the metal complex and of improving a solubility of the metal complex, a known coordination compound may optionally be added. The coordination compound may include, for example, a phosphorus compound such as triphenylphosphine, tributylphosphine and the like; an amine compound such as pyridine, tributylamine and the like, and the like.

The radical polymerization initiator used in the preparation of the compound (a) and of the compound (c) according to the CCTP method may include, for example, peroxide polymerization initiators such as cyclohexanone peroxide, 3, 3, 5-trimethylcyclohexanone peroxide, methylcyclohexanone peroxide, 1,1-bis(tert-butylperoxy)-3,3,5-trimethylcyclohexane, 1,1-bis(tert-butylperoxy)cyclohexane, n-butyl-4,4-bis(tert-butylperoxy) valerate cumene hydroperoxide, 2,5-dimethylhexane-2,5-dihydroperoxide, 1,3-bis(tert-butylperoxy-m-isopropyl)benzene, 2,5-dimethyl-2,5-di(tert-butylperoxy)hexane, diisopropylbenzene peroxide, tert-butylcumyl peroxide, decanoyl peroxide, lauroyl peroxide, benzoyl peroxide, 2,4-dichlorobenzoyl peroxide, bis(tert-butylcyclohexyl)peroxydicarbonate, tert-butylperoxybenzoate, 2,5-dimethyl-2,5-di(benzoylperoxy)hexane and the like; azoinitiators such as 2,2'-azobis(isobutylonitrile), 1,1-azobis(cyclohexane-1-carbonitrile), azocumene, 2,2'-azobismethylvaleronitrile, 4,4'-azobis(4-cyanovaleric acid), 2-(tert-butylazo)-2-cyanopropane, 2,2'-azobis(2,4,4-trimethylpentane), 2,2'-azobis(2-methylpropane), dimethyl-2,2'-azobis(2-methylpropionate) and the like, and the like.

A mixed amount of the radical polymerization initiator may not particularly be limited, but usually is in the range of 0.1 to 20 parts by weight, preferably 0.5 to 10 parts by weight per 100 parts by weight of the monomer.

The organic solvent used in the case where the radical polymerization is carried out in the organic solvent may include ones capable of dissolving or dispersing the monomer used in polymerization and the polymer obtained by polymerization without particular limitations, and specifically may include, for example, hydrocarbon solvent such as heptane, toluene, xylene, octane, mineral spirit and the like; ester solvent such as ethyl acetate, n-butyl acetate, isobutyl acetate, ethylene glycol monomethyl ether acetate, ethylene glycol monobutyl ether acetate and the like; ketone solvent such as methyl ethyl ketone, methyl isobutyl ketone, diisobutyl ketone, cyclohexanone and the like; alcohol solvent such as methanol, ethanol, isopropanol, n-butanol, sec-butanol, isobutanol and the like; ether solvent such as n-butyl ether, dioxane, ethylene glycol monomethyl ether, ethylene glycol monoethyl ether and the like; aromatic petroleum solvent such as Swasol 310 (trade name, marketed by Cosmo Oil Co., Ltd.), Swasol 1000 (trade name as above), Swasol 1500 (trade name as above), and the like. These organic solvents may be used alone or in combination. On copolymerization, the organic solvent is in the range of 400% by weight or less based on a total weight of the monomer component.

The polymerizable unsaturated monomer used in the preparation of the compound (a) and the polymerizable unsaturated monomer (b) are a compound having at least one polymerizable unsaturated bond in one molecule respectively.

The polymerizable unsaturated monomer may include, for example, C₁₋₂₄ alkyl or cycloalkyl (meth)acrylate such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, 2-ethylhexyl (meth)acrylate, n-octyl (meth)acrylate, lauryl (meth)acrylate, tridecyl (meth)acrylate, stearyl (meth)acrylate, cyclohexyl (meth)acrylate, isobornyl (meth)acrylate, tricyclodecanyl (meth)acrylate and the like; carboxyl group-containing ethylenically unsaturated monomer such as acrylic acid, methacrylic acid, maieic anhydride and the like; hydroxyl group-containing ethylenically unsaturated monomer such as 2-hydroxyethyl (meth)acrylate, hydroxypropyl (meth)acrylate, 4-hydroxybutyl (meth)acrylate and the like; epoxy group-containing ethylenically unsaturated monomer such as glycidyl (meth)acrylate, 3,4-epoxycyclohexyl (meth)acrylate and the like; (meth)acrylamide or derivatives thereof such as N,N-dimethylaminoethyl (meth)acrylamide, N,N-diethylaminoethyl (meth)acrylamide, N,N-dimethylaminopropyl (meth)acrylamide, N-methylol acrylamide methyl ether, N-methylol acrylamide butyl ether and the like; oxetane ring-containing ethylenically unsaturated monomer such as 3-ethyl-3-methacryloyloxymethyl oxetane, 3-methyl-3-methacryloyloxymethyl oxetane, 3-butyl-3-methacryloyloxymethyl oxetane and the like; acrylonitrile, (meth)acrylonitrile, styrene, vinyl acetate, piperidinyl-containing (meth)acrylate such as FA-711MM (trade name, marketed by Hitachi Chemical Co., Ltd.), FA-712HM (trade name, marketed by Hitachi Chemical Co., Ltd.) and the like, fluorine-containing alkyl (meth)acrylate, siloxane-containing (meth)acrylate, isocyanate group-containing (meth)acrylate, alkoxysilyl group-containing (meth)acrylate and the like. These monomers may be used alone or in combination.

Of these polymerizable unsaturated monomers, methacrylic acid, methacrylate, styrene and derivatives thereof, α-methylstyrene and derivatives thereof are particularly preferable, because the compound (a) and (c) can be obtained at high yield.

In the preparation of the compound (a) according to the CCTP method, polymerization is carried out by heating the polymerizable unsaturated monomer in the presence of the metal complex and the radical polymerization initiator in the organic solvent, wherein the following methods (1) and (2) may be carried out for the purpose of controlling a temperature increase due to heat of the polymerization reaction:
(1) A method which comprises charging the metal complex and the organic solvent into a reactor, followed by dropping the monomer and the radical polymerization initiator after mixing or separately without mixing at 60 to 200°C with agitation over a predetermined period of time.
(2) A method according to the method (1), wherein a part or total of the metal complex is dropped together with the monomer after mixing or separately without mixing.

The compound (a) may also be obtained by other known methods, for example, a method which comprises subjecting a polymerizable unsaturated monomer to a radical polymerization in the presence of an addition-cleavage type chain transfer agent. Japanese Patent Application Laid-Open No. 169531/00 discloses a method using 2,4-diphenyl-4-methyl-1-pentene as the addition-cleavage type chain transfer agent, which method makes it possible to obtain (a) without carrying out the steps in the CCTP method.

The compound (a) used in the present invention is a compound is a compound having an addition-cleavage type chain transfer reactivity, and is such that a radical polymerization between the compound (a) and the polymerizable unsaturated monomer in the presence of the radical polymerization initiator makes it possible to take place a living radical polymerization reaction.to form the block copolymer as known in the art.

That is, the compound (a) is such that a radical polymerization of the compound (a) with a polymerizable unsaturated monomer (b-1) makes it possible to prepare an AB type diblock copolymer, and a following radical polymerization of the AB type diblock copolymer with a polymerizable unsaturated monomer (b-2) makes it possible to prepare an ABC type triblock copolymer.

The above radical polymerization makes it possible to prepare a block copolymer having an optional molecular weight, block length and monomer composition, and makes it possible to optionally control distributions of functional groups in respective molecules of the acrylic resin.

The block copolymer has a hydroxy value of 0 to 300 mgKOH/g, preferably 20 to 200 mgKOH/g. A hydroxy value more than 300 mgKOH/g of the block copolymer may reduce compatibility with the base resin, and may reduce finish of the coating film.

A hydroxyl group-containing monomer to be copolymerized for the purpose of imparting.hydroxyl group to the block copolymer may include, for example, C₂₋₈ hydroxyl alkyl ester of (meth)acrylic acid such as 2-hydroxyethyl (meth)acrylate, hydroxypropyl (meth)acrylate and the like, N-methylol acrylamide, allyl alcohol, ε-caprolactone-modified acrylic monomer and the like. These may be used alone or in combination.

The block copolymer has an acid value in the range of 1 to 300 mgKOH/g, preferably 3 to 200 mgKOH/g. An acid value less than 1 (one) mgKOH/g may reduce a dispersion stability of the water based coating composition. An acid value more than 300 mgKOH/g may reduce a compatibility of the block copolymer with the base resin, and may reduce a finish of the coating film.

A method of imparting an acid value to the block copolymer may include the following methods (1) and (2):
(1) A method of copolymerizing acid group-containing monomers.
(2) A method which comprises preparing a block copolymer containing various kinds of functional groups without containing an acid group, followed by addition of an acid group-containing compound.

The acid group-containing monomer used in the method (1) may include, for example, (meth)acrylic acid, maleic acid, crotonic acid, itaconic acid, β-carboxyethyl acrylate, 2-acrylamide-2-methylpropane sulfonic acid, allyl sulfonic acid, sulfoethyl methacrylate and a phosphate group-containing monomer such as Light-Ester PM (trade name, marketed by Kyoeisha Chemical Co., Ltd.), and the like. These may be used alone or in combination.

The respective functional groups not containing the acid group in the method (2) may include any chemically reactable functional groups such as epoxy group, oxetane group, oxazoline group, hydroxyl group, amide group, organosilyl group, carbamate group, halogen and the like. The acid-group-containing compound may include any compounds, without particular limitations, capable of imparting an acid functional group such as carboxylic acid, phosphoric acid, sulfonic acid and the like to the block copolymer by addition to the block copolymer due to a chemical reaction with respective functional groups.

The basic substance used as a neutralizing agent of these acids may include, for example, hydroxides of alkali metal, alkali earth metal such as sodium hydroxide, potassium hydroxide, lithium hydroxide, calcium hydroxide, barium hydroxide and the like; ammonia, a primary monoamine such as ethylamine, propylamine, butylamine, benzylamine, monoethanolamine, neopentanolamine, 2-aminopropanol and the like; a secondary monoamine such as diethylamine, diethanolamine, di-n- or di-iso-propanolamine, N-methylethanolamine, N-ethylethanolamine and the like; a tertiary monoamine such as trimethylamine, triethylamine, triisopropylamine, methyldiethanolamine, dimethylethanolamine and the like; a polyamine such as diethylenetriamine, hydroxyethylaminoethylamine, ethylaminoethylamine, methylaminopropylamine and the like. Of these, the tertiary amine is particularly preferable.

The block copolymer has a weight average molecular weight in the range of 500 to 50,000, particularly, 1,000 to 30,000. A molecular weight less than 500 may reduce a suspension stability. A molecular weight more than 50,000 may reduce compatibility of the block copolymer with the base resin, and a finish of the coating film may reduce.

The block copolymer is in the range of 0.1 to 80 parts by weight, particularly 1 to 50 parts by weight per 100 parts by weight of a solid content of the film-forming component in the water based coating composition. An amount less than 0.1 part by weight may reduce a water dispersibility of particles. An amount more than 80 parts by weight may reduce a finish of coating film, acid resistance, weather resistance and the like.

The heat-curable coating composition may include any heat-curable coating compositions known in the art without particular limitations, and specifically may include, for example, a separate type heat-curable coating composition prepared by mixing a heat-curable base resin obtained by introducing a functional group such as hydroxyl group, carboxyl group, epoxy group, unsaturated group, isocyanate group, carbamate group, alkoxysilyl group, oxetane group, oxazoline group and the like into a base resin such as acrylic resin, polyester resin, fluorocarbon resin, silicone resin, epoxy resin, amine-modified resin, phenol resin, urethane resin and the like, with a curing agent having a functional group capable of forming a crosslinked structure with the functional group introduced into the base resin, for example, a blocked isocyanate compound, polyisocyanate compound, polycarbamate compound, polyepoxide, polycarboxylic acid compound, amino resin, phenol resin, hydrazide compound, peroxides, isocyanurate compound, polyamide, polyaziridine compound and the like; and a self-curable type heat-curable coating composition, in which a crosslinked structure may be formed only by the functional groups introduced into the heat-curable base resin.

In the case of both separate type and self-curable type heat-curable coating compositions, respective functional groups and starting materials as exemplified in the base resin and curing agent may be used alone or in combination respectively.

A solvent to be contained in the heat-curable coating composition or the block copolymer of the present invention may not particularly be limited, but preferably include ones having a boiling point of 160°C or lower, or capable of forming an azeotropic mixture with water so as to make desolution easy, for example, an aromatic solvent such as toluene, xylene and the like; alcohol solvent such as n-propyl alcohol, isopropyl alcohol, n-butanol, isobutanol, t-butanol and the like; ketone solvent such as methyl ethyl ketone, methyl isobutyl ketone and the like; ester solvent such as ethyl acetate, butyl acetate and the like.

The heat-curable coating composition may optionally contain a color pigment, extender pigment, anti-corrosive pigment, surface controlling agent, viscosity controlling agent, curing promotor, ultraviolet light absorber, ultraviolet light stabilizer, bubbling inhibitor, and the like.

A method of preparing a water dispersion by dispersing the heat-curable coating composition into water in the presence of the suspension stabilizer comprising the block copolymer may include a method which comprises dissolving the suspension stabilizer into water to form an aqueous solution, followed by adding the heat-curable coating composition to be dispersed, and a method which comprises mixing the heat-curable coating composition with the suspension stabilizer, followed by adding water to be dispersed.

A concentration of the heat-curable coating composition may be in the range of 20 to 100% by weight. A viscosity of a suspension may be controlled by controlling a concentration of a resin solution.

Dispersion into water may be carried out by use of a high speed shear agitator such as a homogenizer.

In the case where a viscosity of an aqueous solution of the heat-curable coating composition and the block copolymer is too high, the viscosity may be controlled by adding water and diluting.

A solid content of the coating film-forming component in the water dispersion obtained by dispersing the heat-curable coating composition into water in the presence of the suspension stabilizer comprising the block copolymer may be controlled so as to be in the range of 25 to 80% by weight. A solid content less than 25% by weight of the water based coating composition may make a viscosity control of the water based coating composition difficult, resulting in developing bubbling and sagging. A solid content more than 80% by weight of the water based coating composition may cause to take place agglomeration of particles in the water-dispersed coating composition.

A temperature, at which the organic solvent is optionally be distilled off and removed from the water dispersion, may easily be controlled under vacuum, so that the desolvation may be carried out at a temperature lower than a reaction temperature of the heat-curable coating composition. Preferably, no organic solvent is contained in the water based coating composition from the standpoint of reduction in the VOC content, but optionally some organic solvent may be contained therein.

In the case where bubbling due to boiling is violent in the desolvation under vacuum, an anti-foaming agent may be added prior to desolvation.

For the purpose of improving the water-dispersibility of particles, the block copolymer may be used in combination with an additive such as a surface active agent. The surface active agent may include any surface active agents, without particular limitations, unless a compatibility with the heat-curable coating composition is remarkably reduced, for example, an anionic surface active agent such as a polyvalent carboxylate, nonylphenol sulfonate and the like; a nonionic surface active agent having an ethylene oxide linkage, an acetylene surface active agent, and the like.

A thickening agent may be added to the water based coating composition, so that the viscosity may be controlled so as to make possible a spray coating. The thickening agent may not particularly be limited, unless a compatibility with the water based coating composition is reduced. The water based coating composition may optionally contain additives such as a surface controlling agent and the like, and a solvent. The resulting water based coating composition can be coated by use of a coating apparatus for the water based coating composition as it is. Further, the water based coating composition is a water-dispersed coating composition, so that foreign particles and spittings in the coating composition may easily be removed by filtration.

### Example

The present invention is explained more in detail by the following Examples and Comparative Examples, in which "part" and "%" represent "part by weight" and "% by weight" respectively. The present invention is not limited to the Examples.

### Preparation Examples of Block Copolymer as Suspension Stabilizer:

### Preparation Example of Compound (a-1):

The polymerizable unsaturated monomers and organic solvents were all subjected to deaeration by introducing nitrogen gas thereinto for at least one hour prior to use.

A reactor equipped with a thermometer, thermostat, stirrer, reflux condenser and dropping apparatus was charged with 35 parts of propylene glycol monomethyl ether, followed by heating at 105°C while introducing nitrogen gas, dropping a mixture of 25 parts of 2-hydroxyethyl methacrylate as a polymerizable unsaturated monomer, 2 parts of methacrylic acid, 20 parts of methyl methacrylate, 53 parts of n-butyl methacrylate, 0.01 part of bis(borondifluorodimethyl glyoximate) Co (II) as a metal complex and 2 parts of 2,2'-azobis(2-methylbutylonitrile) over 3 hours, leaving to stand at 105°C for one hour, dropping 0.5 part of 2,2'-azobis(2-methylbutylonitrile) and 5 parts of propylene glycol monomethyl ether over one hour, leaving to stand at 105°C for one hour to obtain a 70% solid content solution of a compound. (a-1) (X=CH₃, Y=Q=COOR or COOH, R=hydroxyethyl group, methyl group or n-butyl group, Z=H, n=about 15, in above general formula (1) respectively).

### Preparation Examples of Compounds (a-2) to (a-3):

Respective 70% solid content solutions of compounds (a-2) to (a-3) were obtained in the same manner as in compound (a-1) according to the formulation shown in Table 1.

### Preparation Example of Compound (a-4):

A reactor equipped with a thermometer, thermostat, stirrer, reflux condenser and dropping apparatus was charged with 25.9 parts of ethylene glycol monobutyl ether and 20 parts of 2,4-diphenyl-4-methyl-1-pentene, followed by heating at 160°C while introducing nitrogen gas. Separately, 20 parts of 2-hydroxyethyl methacrylate, 30 parts of methacrylic acid and 30 parts of methyl methacrylate was mixed to obtain a polymerizable unsaturated monomer mixture. Separately, 2 parts of Perhexyl D (trade name, marketed by NOF Corporation) and 15 parts of ethylene glycol monobutyl ether were mixed to obtain a polymerization initiator solution.

Following the above heating at 160°C, the polymerizable unsaturated monomer mixture was dropped over 3 hours, and simultaneously the polymerization initiator solution was dropped over 4 hours. After the completion of dropping of the polymerization initiator solution, stirring was carried out for one hour to obtain a 70% solid content solution of a . compound (a-4) (X=CH₃, Y=COOR or COOH, Q=phenyl, Z=initiator residue segment or diphenyl methyl group, n = about 9) in the above general formula (1)).

Respective formulations and characteristic values of compound (a-1) to (a-4) are shown in Table 1.

**Table 1**

| | a-1 | a-2 | a-3 | a-4 |
|---|---|---|---|---|
| 2-hydroxyethyl methacrylate | 25 | 58 | | 20 |
| methacrylic acid | 2 | 23 | | 30 |
| methyl methacrylate | 20 | 4 | 30 | 30 |
| n-butyl methacrylate | 53 | 15 | 70 | |
| α-MSD | | | | 20 |
| metal catalyst | 0.01 | 0.03 | 0.005 | |
| polymerization initiator | 2 | 2 | 2 | 2 |
| weight average molecular weight | 3,000 | 1,500 | 4,000 | 1,900 |
| acid value | 13 | 150 | 0 | 196 |
| hydroxy value | 108 | 250 | 0 | 86 |

### Preparation Example of Block Copolymer (c-1):

A reactor equipped with a thermometer, thermostat, stirrer, reflux condenser and dropping apparatus was charged with 29 parts (solid content 20 parts) of the compound (a-1) solution obtained as above, and 24 parts of propylene glycol monomethyl ether, followed by heating at 125°C while introducing nitrogen gas, dropping a mixture of 20 parts of methyl methacrylate, 60 parts of n-butyl methacrylate and 0.5 part of 2,2'-azobis(2-methylbutylonitrile) over 3 hours, leaving to stand at 125°C for one hour, dropping 0.5 part of 2,2'-azobis(2-methylbutylonitrile) and 10 parts of propylene glycol monomethyl ether over one hour, leaving to stand at 125°C for one hour to obtain a 70% solid content block copolymer (c-1) solution, neutralizing with dimethylethanolamine by 0.7 equivalent, and adding deionized water and diluting until a resin concentration becomes 30%.

### Preparation Examples of Block Copolymers (c-2) to (c-8):

Block copolymers (c-2) to (c-8) were prepared in the same manner as in the block copolymer (c-1) according to the formulations shown in Table 2, followed by neutralizing with dimethylethanolamine by 0.7 equivalent, and adding deionized water and diluting until a resin concentration becomes 30%.

### Preparation Example of Block Copolymer (c-9):

A reactor equipped with a thermometer, thermostat, stirrer, reflux condenser and dropping apparatus was charged with 29 parts (solid content 20 parts) of the compound (a-1) solution as above obtained and 24 parts of propylene glycol monomethyl ether, followed by heating at 125°C while introducing nitrogen gas, dropping a mixture of 0.8 part of 2-hydroxyethyl methacrylate, 1.9 parts of methacrylic acid, 7.3 parts of methyl methacrylate, 20 parts of n-butyl acrylate and 0.2 part of 2,2'-azobis(2-methylbutylonitrile), dropping a mixture of 50 parts of n-butyl acrylate and 0.3 part of 2,2'-azobis(2-methylbutylonitrile) over 2 hours, leaving to stand at 125°C for one hour, dropping 0.5 part of 2,2'-azobis(2-methylbutylonitrile) and 10 parts of propylene glycol monomethyl ether over one hour, leaving to stand at 125°C for one hour to obtain a 70% solid content block copolymer (c-9) solution, neutralizing with. dimethylethanolamine by 0.7 equivalent, and adding deionized water and diluting until a resin concentration becomes 30%.

Formulations and characteristic values of compounds (c-1) to (c-9) are shown in Table 2.

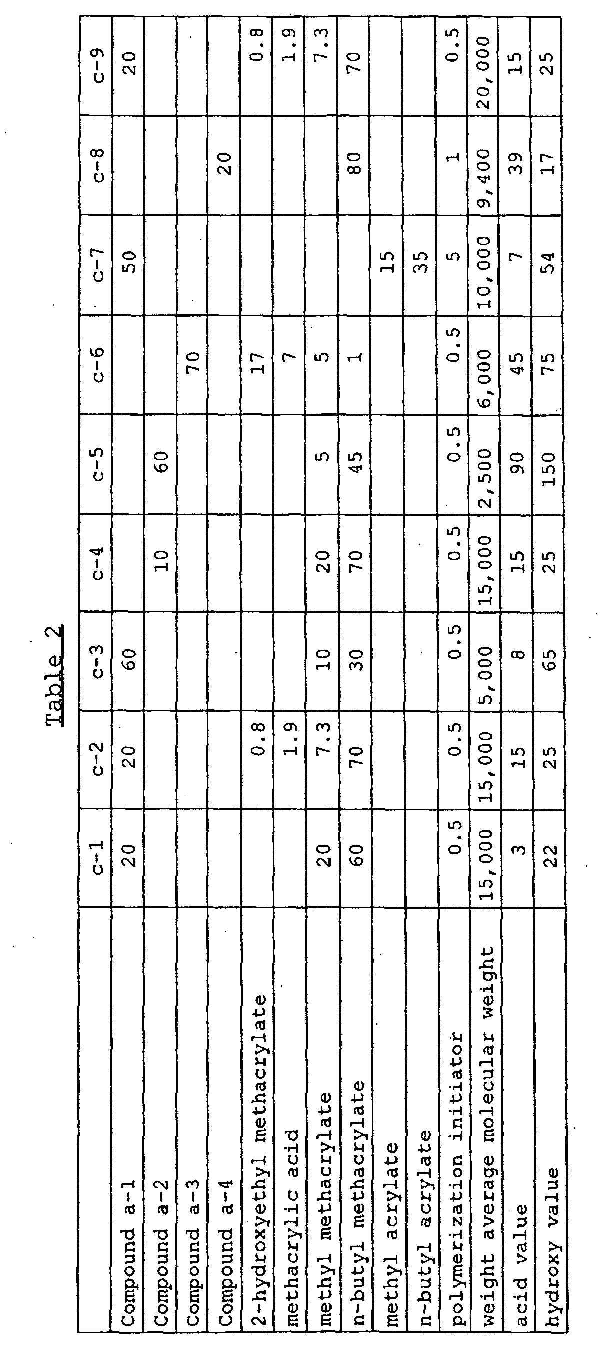

### Comparative Preparation Examples of Acrylic Resin as Suspension Stabilizer:

### Preparation Example of Water Soluble Acrylic Resin (I):

A reactor equipped with a thermometer, thermostat, stirrer, reflux condenser and dropping apparatus was charged with 65 parts of n-butanol, followed by heating at 110°C, dropping a mixture of 15 parts of 2-hydroxyethyl acrylate, 15 parts of acrylic acid, 35 parts of methyl methacrylate, 35 parts of n-butyl methacrylate and 2 parts of 2,2'-azobis(2-methylbutylonitrile) over 3 hours, leaving to stand at 110°C for one hour, dropping 0.5 part of 2,2'-azobis(2-methylbutylonitrile) and 10 parts of n-butanol over one hour, leaving to stand at 110°C for one hour to complete the reaction and to obtain a 57% solid content water-soluble acrylic resin (I), neutralizing with dimethylethanolamine by 0.7 equivalent, and adding deionized water and diluting until a resin concentration becomes 30%.

### Preparation Examples of Water-Soluble Acrylic Resins (II) and (III):

Water-soluble acrylic resins (II) and (III) were prepared in the same manner as in the water-soluble acrylic resin (I) according to the formulations shown in Table 3.

Formulations and characteristic values of acrylic resins (I) to (III) are shown in Table 3.

**Table 3**

| | I | II | III |
|---|---|---|---|
| RMA-450M | | 20 | 20 |
| 2-hydroxyethyl acrylate | 15 | 1.5 | 15 |
| acrylic acid | 15 | 32 | 15 |
| methyl methacrylate | 35 | 26.5 | 30 |
| n-butyl methacrylate | 35 | 25 | 20 |
| polymerization initiator | 2 | 2 | 1 |
| weight average molecular weight | 20,000 | 20,000 | 40,000 |
| acid value | 117 | 250 | 117 |
| hydroxy value | 73 | 8 | 73 |

In Table 3, "RMA-450M" means a trade name of polyethylene oxide (45 mer) methacrylate marketed by Nippon Newkazai Co., Ltd., and the polymerization initiator means 2,2'-azobis(2-methylbutylonitrile).

### Preparation Examples of Heat-Curable Coating Composition:

### Preparation Example of Heat-Curable Coating Composition (A):

A reactor equipped with a thermometer, thermostat, stirrer, reflux condenser and dropping apparatus was charged with 72 parts of n-butanol, followed by heating at 120°C, dropping a mixture of 35 parts of glycidyl methacrylate, 15 parts of styrene, 30 parts of methyl methacrylate, 20 parts of isobutyl methacrylate and 5 parts of 2,2'-azobis(2-methylbutylonitrile) over 3 hours, leaving to stand at 120°C for one hour, dropping 0.5 part of 2,2'-azobis(2-methylbutylonitrile) and 10 parts of xylene over one hour, leaving to stand at 120°C for one hour to complete the reaction, heating up to 160°C, distilling off xylene under 60 mmHg to obtain a solid base resin, dry blending 100 parts of the base resin and 25.3 parts of dodecane diacid in a Henschel mixer, melt-kneading in an extruder to obtain a coating composition, cooling down and grinding to the form of a flake, and pulverizing in a jet mill to a mean particle size of 4.5 µm to obtain a 100% solid content heat-curable coating composition (A).

### Preparation Example of Heat-Curable Coating Composition (B):

A reactor equipped with a thermometer, thermostat, stirrer, reflux condenser and dropping apparatus was charged with 72 parts of xylene, followed by heating at 120°C, dropping a mixture of 25 parts of 2-hydroxyethyl methacrylate, 30 parts of styrene, 20 parts of n-butyl methacrylate, 25 parts of isobutyl methacrylate and 5 parts of 2,2'-azobis(2-methylbutylonitrile) over 3 hours, leaving to stand at 120°C for one hour, dropping 0.5 part of 2,2'-azobis(2-methylbutylonitrile) and 10 parts of xylene over one hour, leaving to stand for one hour to obtain a base resin solution, and adding 50 parts of a blocked isocyanate curing agent B-1530 (trade name, marketed by Daicel-Huls Co., Ltd., ε-caprolactone blocked isophorone diisocyanate), 45 parts of xylene and 0.5 part of Neostann U-100 (trade name, marketed by Nittokasei Co., Ltd., dibutyltindilaurate) to obtain a 55% solid content heat-curable coating composition (B)..

### Preparation Example of Heat-Curable Coating Composition (C):

A reactor equipped with a thermometer, thermostat, stirrer, reflux condenser and dropping apparatus was charged with 35.4 parts of Takenate D-170NH (trade name, marketed by Takeda Chemical Industries Ltd., hexamethylene diisocyanurate type), followed by heating at 60°C, dropping 24.6 parts of 2-ethylhexanol over one hour, heating up to 120°C, stirring until an urethane value becomes 1 (one) or less to complete the reaction, cooling down to room temperature, adding 40 parts of Cymel 303 (trade name, marketed by Mitsui Cytec Ltd., methyl ether type full ether melamine, solid content 100%) and one part of Nacure-5543 (trade name, marketed by King Industries Ltd., sulfonate acid catalyst solution, effective ingredient about 25%), and stirring to obtain a 99% non-volatile matter heat-curable coating composition (C).

### Preparation Example of Water Based Coating Composition:

Combinations of suspension stabilizers with heat--curable coating compositions constituting water based coating compositions in Examples and Comparative Examples are shown in Table 4.

### Preparation Examples of Water Based Coating Compositions in Examples 1 to 3, 5 to 10 and Comparative Examples 1 to 3:

Into macromolecule aqueous solutions respectively comprising 16.7 parts of 30% aqueous acrylic resin solutions as the suspension stabilizer and 74.2 parts of ion exchange water was added 100 parts of the heat-curable.coating composition (A), followed by mixing by use of a homogenizer at 14,000 rpm to obtain water based coating compositions respectively.

### Preparation Examples of Water Based Coating Compositions of Example 4 and Comparative Example 4:

Into macromolecule aqueous solutions respectively comprising 66.7 parts of 30% aqueous acrylic resin solution as the suspension stabilizer and 51.5 parts of ion exchange water was added 100 parts of the heat-curable coating composition (A), followed by mixing by use of a homogenizer at 14,000 rpm to obtain a water based coating composition.

### Preparation Examples of Water Based Coating Compositions of Examples 11 to 13, 15 to 20 and Comparative Examples 5 to 7:

Into macromolecule aqueous solutions respectively comprising 16.7 parts of 30% aqueous acrylic resin solutions as the suspension stabilizer and 74.2 parts of ion exchange water was added 181.8 parts of the heat-curable coating composition (B), followed by mixing by use of a homogenizer at 14,000 rpm to obtain a suspension, diluting with 25 parts of deionized water, introducing the resulting diluted suspension into a reactor equipped with a thermometer, thermostat, stirrer, reflux condenser and vacuum apparatus, heating up to 55°C, controlling at 120 mmHg, carrying out desolvation until a heating residue becomes 55%, and filtering with a 200 mesh silk cloth to obtain water based coating compositions respectively.

### Preparation Examples of Water Based Coating Compositions of Example 14 and Comparative Example 8:

Into macromolecule aqueous solutions respectively comprising 66.7 parts of 30% aqueous acrylic resin solution as the suspension stabilizer and 51.5 parts of ion exchange water was added 181.8 parts of the heat-curable coating composition (B), followed by mixing by use of a homogenizer at 14,000 rpm to obtain a suspension, diluting with 25 parts of deionized water, introducing the diluted suspension into a reactor equipped with a thermometer, thermostat, stirrer, reflux condenser and vacuum apparatus, heating up to 55°C, controlling at 120 mmHg, carrying out desolvation until a heating residue becomes 55%, and filtering with a 200 mesh silk cloth to obtain water based coating compositions respectively.

### Preparation Examples of Water Based Coating Compositions of Examples 21 to 23, 25 to 30, and Comparative Examples 9 to 11:

Into macromolecule aqueous solutions respectively comprising 16.7 parts of 30% aqueous acrylic resin solutions and 74.2 parts of ion exchange water was added 100 parts of the heat-curable coating composition (C), followed by mixing by use of a homogenizer at 14,000 rpm to obtain water based coating compositions respectively.

### Preparation Examples of Water Based Coating Compositions of Example 24 and Comparative Example 12:

Into macromolecule aqueous solutions respectively comprising 66.7 parts of 30% aqueous acrylic resin solution and 51.5 parts of ion exchange water was added 100 parts of the heat-curable coating composition (C), followed by mixing by use of a homogenizer at 14,000 rpm to obtain water based coating compositions respectively.

Respective water based coating compositions obtained in the above Examples and Comparative Examples were subjected the following tests and test results are shown in Tables 4 and 5.

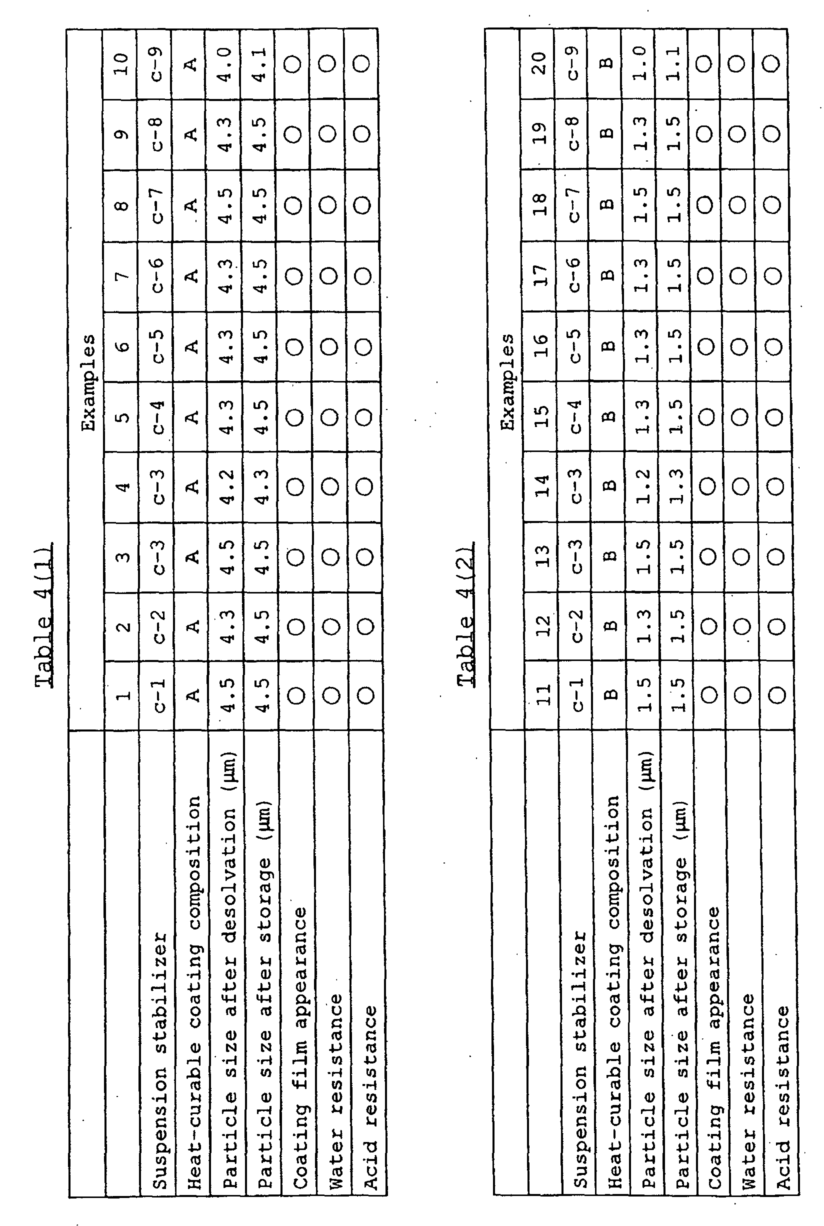

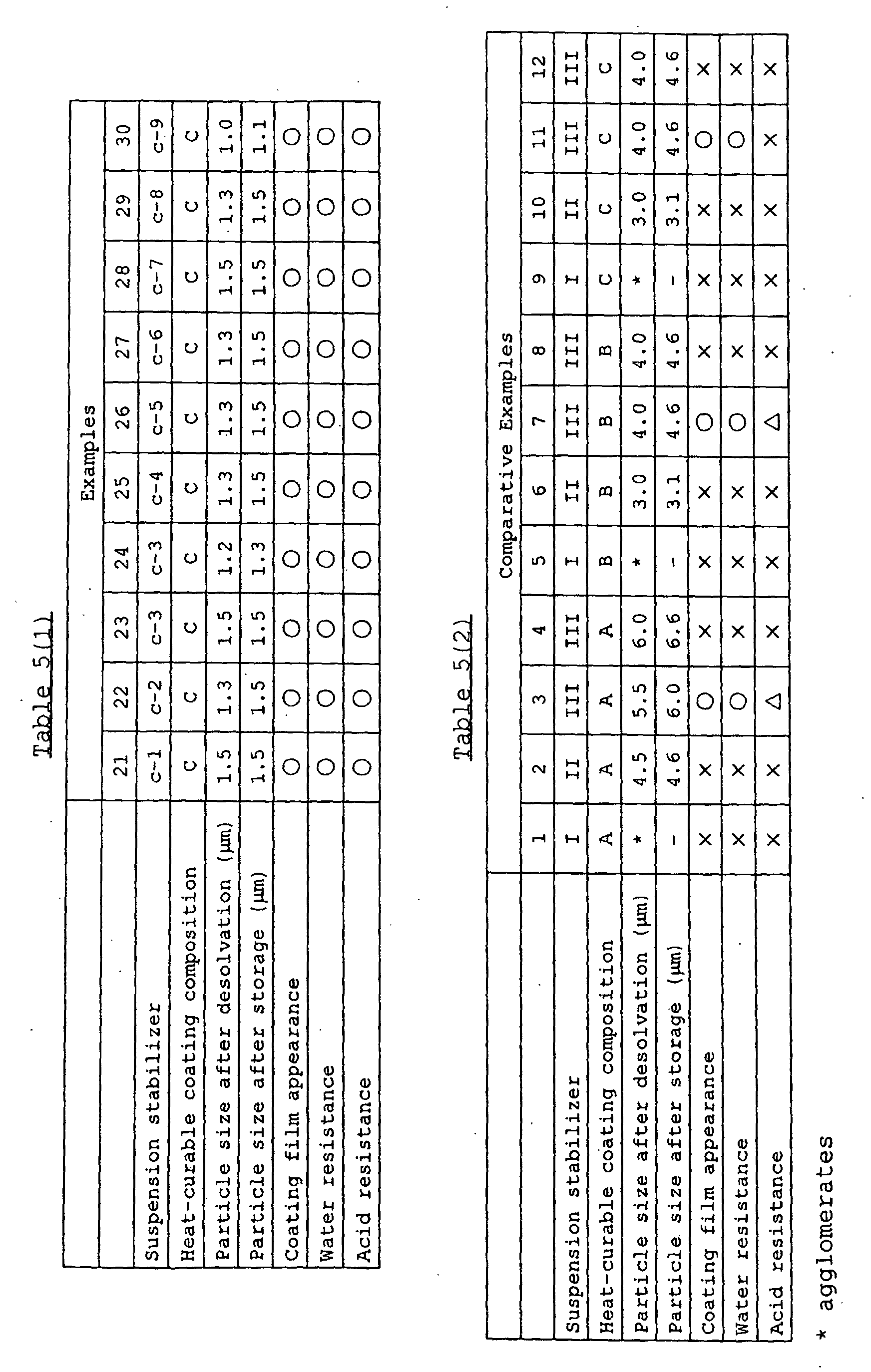

1. Water Dispersion Stability of Particles
   A dispersion stability of the water based coating composition was evaluated based on changes in particle size after desolvation and after one month storage at 30°C respectively.
   The particle size was determined by measuring a mean particle size (50% cumulative particle size) by use of Microtrac FRA (trade name, marketed by Leeds & Northrup Co., Ltd.).
2. Appearance:
   An epoxy-based cationic electrodeposition coating composition was coated onto a zinc phosphate-treated 0.8 mm thick dull steel plate so as to be a dry film thickness of about 20 µm, followed by heat curing to form a cured electrodeposition coating film, coating a surfacer as an intercoat used in the automobile onto the electrodeposition coating film so as to be a dry film thickness of about 20 µm by an electrostatic coating, heat curing, wet sanding with a #400 sand paper, hydro-extracting and drying, coating Magicron Base Coat HM-22 (trade name, marketed by Kansai Paint Co., Ltd., metallic coating composition) so as to be a dry film thickness of about 15 µm, preheating at 80°C for 10 minutes to obtain a test substrate. A water based coating composition was coated onto the test substrate so as to be a dry film thickness of about 40 µm by an electrostatic coating in the conventional water based coating apparatus, followed by preheating at 80°C for 10 minutes, and heat curing at 160°C for 30 minutes to obtain a coating test panel. Appearance of the resulting coating film was evaluated based on transparency, gloss, smoothness of the coating film as follows: ○: good; Δ: slightly poor; ×: poor.
3. Water Resistance:
   A coating test panel was dipped into a hot water at 40°C for 10 days, followed by visually evaluating the appearance of the coating film as follows: ○: No changes in the coating film; Δ: some blisters developed in the coating film; ×: remarkable developments of blisters and whitening in the coating film.
4. Acid Resistance: Onto the coating test panel was dropped 0.4 ml of 40% sulfuric acid, followed by keeping on a hot plate at 85°C for 15 minutes, and evaluating as follows: ○: No changes in conditions of the coating film; Δ: No changes in the coating film, but a slight unevenness on the boundary between a dropped area and a non-dropped area; ×: whitening developed in the coating film.

### Effect of the Invention:

The present invention can provide a water based coating composition having good dispersion stability and capable of making possible low VOC content, and capable of forming a coating film showing good properties in appearance, weather resistance, acid resistance, water resistance and the like.

### Industrial Applicability

The water based coating composition of the present invention is useful in coating of an automobile body and the like.

## Claims

1. A water based coating composition prepared by dispersing a heat-curable coating composition into water in the presence of a suspension stabilizer comprising a block copolymer to obtain a water dispersion, followed by optionally removing an organic solvent from the water dispersion to obtain a water based coating composition having a mean particle size of 0.1 to 10 µm, said block copolymer being a compound (c) prepared by subjecting a compound (a) represented by the following general formula (1): 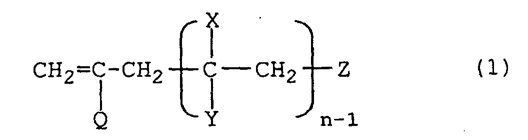 where Q and Y respectively represent H, R, O₂CR, COOH, COOR, CONHR, CONR₂, CN, CONH₂, CONR, phenyl group or halogen, X represents H or R, Z represents H, SR, SOR, SOOR or R, R represents alkyl group, aryl group, aralkyl group, alkalyl group, organosilyl group or alkoxysilyl group, and can contain at least one group or atom selected from epoxy group, oxetane, oxirane ring, hydroxyl group, alkoxy group, amino group, oxazoline, halogen and halogenated alkyl group, being same or different, n is an integer of 6 to 100 ; and a polymerizable unsaturated monomer (b) to radical polymerization in the presence of a radical polymerization initiator, and being neutralized with a basic substance.

2. A water based coating composition as claimed in claim 1, wherein the compound (a) is a compound obtained by subjecting a polymerizable unsaturated monomer to a radical polymerization in the presence of a metal complex as a catalytic chain transfer agent and a radical polymerization initiator.

3. A water based coating composition as claimed in claim 1 or 2, wherein the block copolymer has an acid value of 1 to 300 mgKOH/g and a hydroxy value of 0 to 300 mgKOH/g.

4. A water based coating composition as claimed in any one of claims 1 to 3, wherein the block copolymer has a weight average molecular weight in the range of 500 to 50,000.

5. A water based coating composition as claimed in any one of claims 1 to 4, wherein the suspension stabilizer is in the range of 0.1 to 80 parts by weight per 100 parts by weight of a solid content of the coating film-forming component in the water based coating composition.

6. A water based coating composition as claimed in any one of claims 1 to 5, wherein the compound (a) is a compound obtained by a radical polymerization with a polymerizable unsaturated monomer in the presence of 2,4-diphenyl-4-methyl-1-pentene and a radical polymerization initiator.

7. A water based coating composition as claimed in any one of claims 1 to 6, wherein the block copolymer is a block copolymer obtained by a method which comprises subjecting the compound (a) and a polymerizable unsaturated monomer (b) to a radical polymerization, the polymerizable unsaturated monomer (b) being divided into at least two components having a composition different from each other so that respective components of the monomer (b) can be successively polymerized with the compound (a).
